(19) Europäisches Patentamt
European Patent Office
Office européen des brevets

(11) EP 2 527 594 B1

(12) EUROPEAN PATENT SPECIFICATION

(45) Date of publication and mention of the grant of the patent:
**26.02.2014 Bulletin 2014/09**

(51) Int Cl.:
***F01D 5/02*** (2006.01) ***F01D 5/34*** (2006.01)
***C08L 23/14*** (2006.01)

(21) Application number: **11189574.4**

(22) Date of filing: **23.05.2011**

(54) **Random propylene copolymer with high stiffness and low haze**

Zufälliges Propylencopolymer mit hoher Steifigkeit und geringer Trübung

Copolymère de propylène aléatoire doté d'une grande raideur et de faible trouble

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.11.2012 Bulletin 2012/48**

(62) Document number(s) of the earlier application(s) in accordance with Art. 76 EPC:
**11167121.0 / 2 527 593**

(73) Proprietor: **Borealis AG**
**1220 Vienna (AT)**

(72) Inventors:
- **Doshev, Petar**
  **4040 Linz (AT)**
- **Leskinen, Pauli**
  **00700 Helsinki (FI)**
- **Gahleitner, Markus**
  **4501 Neunhofen/Krems (AT)**
- **Potter, Elisabeth**
  **4020 Linz (AT)**
- **Kheirandish, Saeid**
  **41468 Neuss (DE)**

(74) Representative: **Maiwald Patentanwalts GmbH**
**Elisenhof**
**Elisenstrasse 3**
**80335 München (DE)**

(56) References cited:
**EP-A1- 1 873 173**
**EP-A1- 2 147 939**
**EP-A1- 2 281 851**
**US-A- 3 607 987**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 527 594 B1

## Description

The present invention relates to a new propylene copolymer and applications made therefrom.

In the field of thin-wall packaging it is of great importance to have a well flowing material with good mechanical properties, i.e. a high tensile modulus and good impact strength. The good flowability is needed for achieving a good processability in various manufacturing methods of articles, e.g. injection molding processes, thereby allowing the high production speed required in this mass production market. The mechanical properties are also critical in view of the thin-walled articles. Particularly, in the field of containers there is a need to hold the content such as food contained therein as well as having sufficient stiffness to be stacked. Finally, the materials should also withstand mechanical compression damage, which is frequently incurred by e.g. dropping the articles.

Still further, also the haze should be acceptable. Particularly, a good balance between stiffness and haze is desirable.

However, at least some of these objects may only be achieved at the expense of other of these objects. For instance with increase of melt flow rate the stiffness can be improved, however the impact properties significantly drop. Thus impact behavior and melt flow of a polymer behave in a conflicting manner.

Further a high degree of crystallinity of polypropylene renders the material rather stiff, however also increases the haze. The crystallinity is influenced by the amount of comonomer contained in the polymer and by the molecular weight of the polymer chains, i.e. by the molecular weight distribution. A higher amount of comonomer means more interruption of the isotactic polypropylene units and hence less crystallinity. To a certain extent this entails improved optical properties, i.e. better haze values. However, the stiffness is reduced thereby. Hence, the balance of stiffness and haze is of great importance.

To solve said conflicts of aims EP 1 873 173 provides a polypropylene copolymer with a rather high melt flow rate value, namely an $MFR_2$ of 70 g/10 min or more. This means a rather low molecular weight which is achieved by the known method of visbreaking. During visbreaking the polypropylene chains received from the polymerization reactor are subjected to degradation by applying peroxide compounds. The result is that the polymer chains are cut statistically and a material with a higher $MFR_2$-value is received.

However, said materials may still be improved as regards their mechanical properties. Still further, materials subjected to visbreaking generally suffer from bad taste and odor which is a great disadvantage in the field of food packaging.

EP 2 281 851 provides polypropylene compositions with melt flow rates up to 60 g/10min. However the compositions with such high melt flow rates $MFR_2$ suffer already from extreme high haze values and low impact values. Further the polymerization process for obtaining such compositions could be further improved in view of productivity.

It is therefore an object of the present invention to provide a polypropylene which is perfectly tailored for thin-wall packaging market and which can be economically obtained. Accordingly it is in particular an object ofthe present invention to provide a polypropylene which is featured by extremely high flowability and at the same time keeping impact properties and optical properties on a high level.

This object is solved by propylene copolymer according to claim 1. In particular, the propylene copolymer (R-PP) comprises a propylene copolymer fraction (C-A) and a propylene copolymer fraction (B) in the weight ratio [(C-A)/(B)] of 30/70 to 70/30, wherein said propylene copolymer (R-PP) has

(a) a comonomer content in the range of equal or more than 1.5 to equal or below 8.0 wt.-%, the comonomers are ethylene and /or $C_4$ to $C_{12}$ $\alpha$-olefins,
and

(b) a melt flow rate $MFR_2$ (230 °C) measured according to ISO 1133 of equal or more than 65 to equal or below 200 g/10min,
and

(c) a molecular weight distribution (MWD) measured by gel permeation chromatography (GPC) in the range of equal or more than 4.0 to equal or below 7.0,
wherein further

(d) said propylene copolymer fraction (C-A) has a comonomer content in the range of equal or more than 0.5 to equal or below 3.0 wt.-%, the comonomers are ethylene and /or $C_4$ to $C_{12}$ $\alpha$-olefins, and

(e) said propylene copolymer fraction (B) has a comonomer content in the range of equal or more than 2.5 to equal or below 10.0 wt.-%, the comonomers are ethylene and /or $C_4$ to $C_{12}$ $\alpha$-olefins.

The finding of the present invention is to provide a sequential polymerization process wherein at least in the first reactor the temperature is rather high, i.e. equal or more than 70 °C, and the polymerization is run in the presence of a solid catalyst system with very low porosity, i.e. with a pore volume measured according to ASTM 4641 of less than 1.0 ml/g, obtaining thereby the above propylene copolymer.

Accordingly, a process for the preparation of a propylene copolymer (R-PP) comprising a polypropylene fraction (A) and a propylene copolymer fraction (B) is a sequential polymerization process comprising at least two reactors connected in series,
wherein said process comprises the steps of

(A) polymerizing in a first reactor (R-1)

(A1) propylene and
(A2) optionally ethylene and /or a $C_4$ to $C_{12}$ $\alpha$-olefin, obtaining said polypropylene fraction (A),

(B) transferring said polypropylene fraction (A) and unreacted comonomers from the first reactor into a second reactor (R-2),
(C) feeding to said second reactor (R-2)

(C1) propylene and
(C2) ethylene and /or a $C_4$ to $C_{12}$ $\alpha$-olefin,

(D) polymerizing in said second reactor (R-2) and in the presence of said polypropylene fraction (A)

(D1) propylene and
(D2) ethylene and /or a $C_4$ to $C_{12}$ $\alpha$-olefin,
obtaining said propylene copolymer fraction (B), i.e. said propylene copolymer (R-PP) comprising the polypropylene fraction (A) and the propylene copolymer fraction (B),

wherein further

(i) the temperature in the first reactor (R-1) is of more than 65 °C to equal or below 95 °C, preferably of more than 70 °C to equal or below 90 °C,
(ii) the temperature in the second reactor (R-2) is of equal or more than 75 °C to equal or below 100 °C, preferably of equal or more than 80 °C to equal or below 95 °C,
(iii) in the first reactor (R-1) and second reactor (R-2) the polymerization takes place in the presence of a solid catalyst system (SCS) having a surface area measured according to ASTM D 3662 of less than 30 $m^2/g$ and/or a pore volume measured according to ASTM 4641 of less than 1.0 ml/g,

wherein further

(I) said solid catalyst system (SCS) comprises

(Ia) a transition metal selected from one of the groups 4 to 6 of the periodic table (IUPAC),
(Ib) a metal which is selected from one of the groups I to 3 of the periodic table (IUPAC), and
(Ic) an internal electron donor (ID).

It has surprisingly been found that with the above defined process a propylene copolymer (R-PP) can be efficiently produced, wherein the propylene copolymer (R-PP) is featured by a high melt flow rate, good impact behavior, good stiffness and low haze.

In the following the invention is defined in more detail.

<u>Process</u>

As indicated above the instant propylene copolymer (R-PP) is produced in a sequential polymerization process. The term "sequential polymerization process" indicates that the propylene copolymer (R-PP) is produced in at least two reactors connected in series.

An essential aspect of the present invention is that in step (A), i.e. in the first reactor (R-1), preferably in the slurry reactor (SR), like in the loop reactor (LR), the temperature is more than 65 °C, preferably equal or more than 70

°C, yet more preferably equal or more than 75 °C, still more preferably in the range of equal or more than 65 °C to equal or below 95 °C, still more preferably in the range of equal or more than 70 °C to equal or below 90 °C.

The pressure in step (A), i.e. in the first reactor (R-1), preferably in the slurry reactor (SR), like in the loop reactor (LR), is within the range of 25 bar to 80 bar, preferably between 30 bar to 70 bar. Hydrogen can be added for controlling the molar mass in a manner known per se.

Subsequently, the reaction mixture from step (A) is transferred to the second reactor (R-2), i.e. to the gas phase reactor (GPR-1), i.e. to step (D), whereby the temperature in step (D) is preferably within the range of equal or more than 75 °C to 100 °C, more preferably within the range of equal or more than 80 °C to 95 °C.

Further it is preferred that in step (D), i.e. within the second reactor (R-2), preferably within the gas phase reactor (GPR-1), the pressure is within the range of 5 bar to 50 bar, preferably between 15 bar to 40 bar. Hydrogen can be added for controlling the molar mass in a manner known per se.

The residence time can vary in both reactor zones.

In one embodiment of the process for producing propylene copolymer (R-PP) the residence time in bulk reactor, e.g. loop, is in the range 0.2 to 4 hours, e.g. 0.3 to 1.5 hours and the residence time in gas phase reactor (GPR) will generally be 0.2 to 6.0 hours, like 0.5 to 4.0 hours.

The conditions in the other gas phase reactors (GPR), if present, are similar to the second reactor (R-2).

Especially good results are achievable by the present process in case the instant process encompass a pre-polymerization (P) prior to the polymerization in the first reactor (R-1). The pre-polymerization (P) can be conducted in the first reactor (R-1), however it is preferred that the pre-polymerization (P) takes place in a separate reactor, so called pre-polymerization reactor (P-R). A pre-polymerization reactor is of smaller size compared to the first (R-1) and second (R-2) reactor, respectively. Preferably, the reaction volume of the pre-polymerization reactor (P-R) will be between 5 % and 30 % of the reaction volume of the first reactor (R-1), like the loop reactor. In said pre-polymerization reactor (P-R), the pre-polymerization (P) is performed in bulk or slurry as defined for the first reactor (R-1) above.

Further it is appreciated that the pre-polymerization temperature is rather low, i.e. equal or below 50 °C, more preferably between equal or more than 10 °C to equal or below 50 °C, yet more preferably between 12 to 45 °C, even more preferably between 15 to 40 °C, like between 18 and 35°C.

The pressure during pre-polymerization can be between 20 to 80 bar, preferably between 25 to 75 bar, like 30 to 70 bar. Residence times can vary between 0.1 to 1.5 hours, like between 0.2 and 1.0 hours.

In the pre-polymerization (P) a polypropylene (Pre-PP) is produced which differs from the propylene copolymer (R-PP) obtained by the instant process. Accordingly the polypropylene (Pre-PP) obtained in the pre-polymerization step (P) can be a propylene homopolymer (Pre-H-PP) or a propylene copolymer (Pre-R-PP), the latter being preferred. Accordingly it is appreciated that the propylene copolymer (Pre-R-PP) obtained in the pre-polymerization step (P) comprises units derivable from

(a) propylene and
(b) ethylene and /or a $C_4$ to $C_{12}$ $\alpha$-olefin.

The comonomer content, i.e. the ethylene and /or a $C_4$ to $C_{12}$ $\alpha$-olefin content, preferably the ethylene content, within the propylene copolymer (Pre-R-PP) is equal or more than 0.5 to equal or below 8.0 wt.-%, more preferably of equal or more than 1.5 to equal or below 5.0 wt.-%.

Further it is appreciated that the weight average molecular weight ($M_w$) of the polypropylene (Pre-PP) produced in the pre-polymerization step (P), i.e. of the propylene homopolymer (Pre-H-PP) or the propylene copolymer (Pre-R-PP), is rather low. Thus it is preferred that the polypropylene (Pre-PP), i.e. the propylene homopolymer (Pre-H-PP) or the propylene copolymer (Pre-R-PP), has weight average molecular weight ($M_w$) of below or equal 300,000 g/mol, more preferably below 100,000 g/mol. In preferred embodiments the weight average molecular weight ($M_w$) is in the range of 3,000 to 300,000 g/mol, more preferably in the range of 5,000 to 100,000 g/mol.

Preferably the weight ratio of the polypropylene (Pre-PP), i.e. of the propylene homopolymer (Pre-H-PP) or the propylene copolymer (Pre-R-PP), and the solid catalyst system (SCS) is below 1000, more preferably below 700, yet more preferably below 500, still yet more preferably below 450. It is especially preferred that the weight ratio of the polypropylene (Pre-PP), i.e. ofthe propylene homopolymer (Pre-H-PP) or the propylene copolymer (Pre-R-PP), and the solid catalyst system (SCS) is in the range of 20 to 1000, more preferably 50 to 700, yet more preferably 70 to 500, still more preferably 80 to 450.

The solid catalyst system (SCS) as defined in more detail below is preferably dispersed into polypropylene (Pre-PP), i.e. into the propylene homopolymer (Pre-H-PP) or the propylene copolymer (Pre-R-PP). Thereby the solid catalyst system (SCS) is distributed within the polypropylene (Pre-PP). The term "distributed" shall preferably indicate that the solid catalyst system (CSC) is not concentrated at one place within the polypropylene (Pre-PP) but (evenly) dispersed within polypropylene (Pre-PP). This has the advantage that - contrary to commercially available supported catalyst systems -an overheating at the beginning of the polymerization process due to "hot spots" areas caused by

concentration of catalytic species at one place is diminished.

Solid catalyst system (SCS)

As indicated above one further important aspect of the present invention is that a specific catalyst system must be used in the instant polymerization process.

The solid catalyst system (SCS) used comprises

(a) a transition metal selected from one of the groups 4 to 6, in particular of group 4 of the periodic table (IUPAC), preferably Ti,
(b) a metal which is selected from one of the groups 1 to 3 ofthe periodic table (IUPAC), preferably Mg,
(c) an internal electron donor (ID),
(d) optionally a cocatalyst, like an aluminum compound, and
(e) optionally an external donor, like an organo silane compound, especially an hydrocarbyloxy silane compound.

The metal is preferably brought in the solid catalyst system (SCS) as a metal compound (CM) which forms with the internal electron donor (ID) or its precursor (P-ID) a complex (C). In turn the transition metal is preferably brought in the solid catalyst system (SCS) as a transition metal compound (CT). Further information concerning this matter is provided below.

A remarkable feature of the used catalyst system (SCS) is that it is of solid form. In other words for the propylene copolymer (R-PP) polymerization an heterogeneous catalysis is applied, i.e. the aggregate state (solid state) of the catalyst system (SCS) differs from the aggregate state of the reactants, i.e. the propylene and optionally other $\alpha$-olefins used. Different to known solid catalyst systems the catalyst system (SCS) used in the present invention is a so-called self-supported catalyst system, or in other words the solid catalyst system (SCS) used does not comprise in significant amounts catalytically inert material used normally as support material. Inert support material according to this invention is any material which is used to decrease solubility of the catalyst systems in media which are generally used in polymerization processes as well in common solvents like pentane, heptane and toluene. Typical inert support materials are organic and inorganic support materials, like silica, $MgCl_2$ or porous polymeric material. These support materials are generally used in amounts of at least 50 wt.-%, more preferably of at least 70 wt.-%. Accordingly in the preparation of the solid catalyst system (SCS) used in the present invention no external support material is used and thus the amount of such an inert support material within the solid catalyst system (SCS) is of not more than 10.0 wt.-%, yet more preferably below 5.0 wt.-%, yet more preferably not detectable.

Typically the solid catalyst system (SCS) has a surface area measured according to the commonly known BET method with $N_2$ gas as analysis adsorptive (ASTM D 3663) of less than 30 $m^2/g$, e.g. less than 20 $m^2/g$. In some embodiments the surface area is more preferably of less than 15 $m^2/g$, yet more preferably of less than 10 $m^2/g$. In some other embodiments, the solid catalyst system shows a surface area of 5 $m^2/g$ or less, which is the lowest detection limit with the methods used in the present invention.

The solid catalyst particle (SCS) can be additionally or alternatively defined by the pore volume measured according to ASTM 4641. Thus it is appreciated that the solid catalyst particle (SCS) has a pore volume of less than 1.0 ml/g. In some embodiments the pore volume is more preferably of less than 0.5 ml/g, still more preferably of less than 0.3 ml/g and even less than 0.2 ml/g. In another preferred embodiment the pore volume is not detectable when determined according to ASTM 4641.

Moreover the solid catalyst particle (SCS) typically has a mean particle size of not more than 500 $\mu$m, i.e. preferably in the range of 2 to 500 $\mu$m, more preferably 5 to 200 $\mu$m. It is in particular preferred that the mean particle size is below 80 $\mu$m, still more preferably below 70 $\mu$m. A preferred range for the mean particle size is 5 to 80 $\mu$m, more preferred 10 to 60 $\mu$m.

The solid catalyst system (SCS) is preferably obtainable, i.e. obtained, by a process comprising contacting

(a) a solution of a complex (C) of a metal which is selected from one of the groups 1 to 3 of the periodic table (IUPAC) and an internal electron donor (ID), said complex (C) is obtained by reacting a compound (CM) of said metal with said internal electron donor (ID) or a precursor (P-ID) thereof,
with
(b) a liquid transition metal compound (CT) or a solution of a transition metal compound (CT).

Accordingly one important aspect of the preparation of the solid catalyst system is that neither the complex (C) nor the transition metal compound (CT) are present in solid form during the solid catalyst system (SCS) preparation, as it is the case for supported catalyst systems.

The solution of a complex (C) of the metal which is selected from one of the groups 1 to 3 of the periodic table

(IUPAC) and the internal electron donor (ID) is obtained by reacting a compound (CM) of said metal with said internal electron donor (ID) or a precursor (P-ID) thereof in an organic solvent.

The metal compound (CM) used for the preparation of the complex (C) may be any metal compound (CM) which is selected from one of the groups 1 to 3 of the periodic table (IUPAC). However it is preferred that the complex (C) is a Group 2 metal complex, even more preferred a magnesium complex. Accordingly it is appreciated that the metal compound (CM) used in the preparation of said complex (C) is a Group 2 metal compound, like a magnesium compound.

Thus first a metal compound (CM) which is selected from one of the groups 1 to 3 of the periodic table (IUPAC), preferably from a Group 2 metal compound, like from a magnesium compound, containing preferably an alkoxy moiety is produced. More preferably the metal compound (CM) to be produced is selected from the group consisting of a Group 2 metal dialkoxide, like magnesium dialkoxide, a complex containing a Group 2 metal dihalide, like magnesium dihalide, and an alcohol, and a complex containing a Group 2 metal dihalide, like magnesium dihalide, and a Group 2 metal dialkoxide, like magnesium dialkoxide.

Thus the metal compound (CM) which is selected from one of the groups 1 to 3 of the periodic table (IUPAC), preferably from the Group 2 metal compound, like from the magnesium compound, is usually titaniumless.

Most preferably, the magnesium compound is provided by reacting an alkyl magnesium compound and/or a magnesium dihalide with an alcohol. Thereby, at least one magnesium compound precursor, selected from the group consisting of a dialkyl magnesium $R_2Mg$, an alkyl magnesium alkoxide RMgOR, wherein each R is an identical or a different $C_1$ to $C_{20}$ alkyl, and a magnesium dihalide $MgX_2$, wherein X is a halogen, is reacted with at least one alcohol, selected from the group consisting of monohydric alcohols R'OH and polyhydric alcohols $R'(OH)_m$, wherein R' is a $C_1$ to $_{20}$ hydrocarbyl group and m is an integer selected from 2, 3, 4, 5 and 6, to give said magnesium compound (CM). R' is the same or different in the formulas R'OH and $R'(OH)_m$. The R ofthe dialkyl magnesium is preferably an identical or different $C_4$ to $C_{12}$ alkyl. Typical magnesium alkyls are ethylbutyl magnesium, dibutyl magnesium, dipropyl magnesium, propylbutyl magnesium, dipentyl magnesium, butylpentyl magnesium, butyloctyl magnesium and dioctyl magnesium. Typical alkyl-alkoxy magnesium compounds are ethyl magnesium butoxide, magnesium dibutoxide, butyl magnesium pentoxide, magnesium dipentoxide, octyl magnesium butoxide and octyl magnesium octoxide. Most preferably, one R is a butyl group and the other R of $R_2Mg$ is an octyl group, i.e. the dialkyl magnesium compound is butyl octyl magnesium.

The alcohol used in the reaction with the magnesium compound precursor as stated in the previous paragraph is a monohydric alcohol, typically $C_1$ to $C_{20}$ monohydric alcohols, a polyhydric (by definition including dihydric and higher alcohols) alcohol or a mixture of at least one monohydric alcohol and at least one polyhydric alcohol. Magnesium enriched complexes can be obtained by replacing a part of the monohydric alcohol with the polyhydric alcohol. In one embodiment it is preferred to use one monohydric alcohol only.

Preferable monohydric alcohols are those of formula R'OH in which R' is a $C_2$ to $C_{16}$ alkyl group, most preferably a $C_4$ to $C_{12}$ alkyl group, like 2-ethyl-1-hexanol.

Typical polyhydric alcohols are ethylene glycol, propene glycol, trimethylene glycol, 1, 2-butylene glycol, 1, 3-butylene glycol, 1, 4-butylene glycol, 2, 3-butylene glycol, 1,5-pentanediol, 1,6-hexanediol, 1,8-octanediol, pinacol, diethylene glycol, triethylene glycol, glycerol, trimethylol propane and pentaerythritol. Most preferably the polyhydric alcohol is selected from the group consisting of ethylene glycol, 2-butyl-2-ethyl-1, 3-propanediol and glycerol.

The reaction conditions used to obtain the metal compound (CM) which is selected from one of the groups 1 to 3 of the periodic table (IUPAC), preferably the metal compound (CM) of Group 2, even more preferred the magnesium compound, may vary according to the used reactants and agents. However according to one embodiment of the present invention, said magnesium compound precursor is reacted with said at least one alcohol at temperature of 30 to 80 °C for 10 to 90 min, preferably about 30 min.

After having obtained the metal compound (CM) which is selected from one of the groups 1 to 3 of the periodic table (IUPAC), preferably the metal compound of Group 2, even more preferred the magnesium compound, said compound (CM) is further reacted with an internal electron donor (ID) or electron donor precursor (P-ID). The internal electron donor (ID) is preferably a mono- or diester of a carboxylic acid or diacid, the latter being able to form a chelate-like structured complex, preferably a mono- or diester of an aromatic carboxylic acid or diacid. Said carboxylic acid ester or diester, preferably the mono- or diester of the aromatic carboxylic acid or diacid, can be formed in situ by reaction of an carboxylic acid halide or diacid halide, i.e. a preferred internal electron donor precursor (P-ID), with a $C_2$-$C_{16}$ alkanol and/or diol. Preferably said metal compound (CM) reacts with an internal electron donor precursor (P-ID), i.e. with a dicarboxylic acid dihalide having preferably the formula (I)

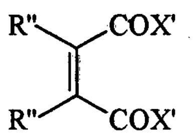

wherein

each R" is an identical or different $C_1$ to $C_{20}$ hydrocarbyl group or both R"s form together with the two unsaturated carbons seen in the formula (I) a $C_5$ to $C_{20}$ aliphatic or aromatic ring, and
X' is a halogen
to give the complex (C).

Among non-aromatic dicarboxylic acid dihalides, the group consisting of maleic acid dihalide, fumaric acid dihalide and their R" substituted derivatives such as citraconic acid dihalide and mesaconic acid dihalide, respectively, are the most important.

Among the cyclic, preferably aromatic, dicarboxylic acid dihalides, the group consisting of phthalic acid dihalide (1,2-benzene dicarboxylic acid dihalide), its hydrogenate 1, 2-cyclohexane dicarboxylic acid dihalide, and their derivatives, is the most important. Most preferably, said dicarboxylic acid dihalide is phthaloyl dichloride.

Preferably the magnesium compound is reacted with the dicarboxylic acid halide in a molar ratio $Mg_{total\ added}$/dicarboxylic acid halide of 1 : 1 and 1 : 0.1, preferably between 1 : 0. 6 and 1 : 0. 25.

Preferably the metal compound (CM) which is selected from one of the groups 1 to 3 of the periodic table (IUPAC), more preferably the metal compound of Group 2, even more preferably the magnesium compound, is reacted with the internal electron donor (ID) or with the internal electron donor precursor (P-ID), i.e. the dicarboxylic acid dihalide, under at least one of the following conditions:

- adding said dicarboxylic acid dihalide under room temperature and
- heating the obtained reaction mixture to a temperature of 20 to 80 °C, preferably of 50 to 70 °C
- keeping the temperature for 10 to 90 min, preferably for 25 to 35 min.

The organic solvent used for the preparation of the complex (C) can be any organic solvent as long as it is ensured that the complex (C) is dissolved at ambient temperatures, i.e. at temperatures up to 80 °C (20 to 80 °C). Accordingly it is appreciated that the organic solvent comprises, preferably consists of, $C_5$ to $C_{10}$ hydrocarbon, more preferably of a $C_6$ to $C_{10}$ aromatic hydrocarbon, like toluene.

Suitable transition metal compounds (CT) are in particular transition metal compounds (CT) of transition metals of groups 4 to 6, in particular of group 4 or 5, of the periodic table (IUPAC). Suitable examples include Ti and V, in particular preferred is a compound of Ti, like $TiCl_4$.

In addition to the compounds described above, the solid catalyst system (SCS) can comprise e.g. reducing agents, like compounds of group 13, preferably Al-compounds containing alkyl and/or alkoxy residues, and optionally halogen residues. These compounds can be added into the solid catalyst system (SCS) preparation at any step before the final recovery.

The solid catalyst system (SCS) used in the invention may comprise in addition to the catalyst components conventional cocatalyst, e.g. those based on compounds of group 13 of the periodic table (IUPAC), e.g. organo aluminum, such as aluminum compounds, like aluminum alkyl, aluminum halide or aluminum alkyl halide compounds (e.g. triethylaluminum) compounds, can be mentioned.

Additionally one or more external donors can be used which may be typically selected e.g. from silanes or any other well known external donors in the field. External donors are known in the art and are used as stereoregulating agent in propylene polymerization. The external donors are preferably selected from diethylamino-triethoxy-silane (U-Donor), hydrocarbyloxy silane compounds and hydrocarbyloxy alkane compounds.

Typical hydrocarbyloxy silane compounds have the formula (II)

$$R'_0Si(OR")_{4-0} \qquad (II)$$

wherein

R' is an a- or b-branched $C_3$ to $C_{12}$-hydrocarbyl,
R" a $C_1$ to $C_{12}$-hydrocarbyl, and
0 is an integer 1-3.

More specific examples of the hydrocarbyloxy silane compounds which are useful as external electron donors in the invention are diphenyldimethoxy silane, dicyclopentyldimethoxy silane (D-Donor), dicyclopentyldiethoxy silane, cyclopentylmethyldimethoxy silane, cyclopentylmethyldiethoxy silane, dicyclohexyldimethoxy silane, dicyclohexyldiethoxy silane, cyclohexylmethyldimethoxy silane (C-Donor), cyclohexylmethyldiethoxy silane, methylphenyldimethoxy silane, diphenyldiethoxy silane, cyclopentyltrimethoxy silane, phenyltrimethoxy silane, cyclopentyltriethoxy silane, phenyltriethoxy silane. Most preferably, the organo silane compounds are diethylamino-triethoxy-silane (U-Donor), cyclohexylmethyl dimethoxy silane (C-Donor), or dicyclopentyl dimethoxy silane (D-Donor), the latter especially preferred.

After contacting the solution of the complex (C) with the liquid of the transition metal compound (CT) or the solution of the transition metal compound (CT) either the solid catalyst system (SCS) spontaneous precipitates or alternatively an emulsion is formed, the latter being preferred. Whether an emulsion is obtained or an immediate precipitation occurs depend on the specific conditions chosen. Reference is made inter alia to the International patent applications WO 03/000754, WO 03/000757, and WO 2007/077027 as well as to the European patent application EP 2 251 361. In the following the precipitation method as well as the emulsion method is described in more detail.

<u>Emulsion method:</u>

The solid catalyst system according to the emulsion method is obtained by

(a) preparing a solution of a complex (C) of a metal which is selected from one of the groups 1 to 3 of the periodic table (IUPAC) and an internal electron donor (ID), said complex (C) is obtained by reacting a compound (CM) of said metal with said internal electron donor (ID) or a precursor (P-ID) thereof in an organic solvent,
(b) mixing said solution of complex (C) with a liquid transition metal compound (CT),
(c) obtaining thereby an emulsion of a continuous phase and an dispersed phase, said dispersed phase is in form of droplets and comprises the complex (C) and the transition metal compound (CT),
(d) solidifying the droplets of the dispersed phase obtaining thereby the solid catalyst system (SCS).

Accordingly for the emulsion method the complex (C) is preferably dissolved in an $C_6$ to $C_{10}$ aromatic hydrocarbon, like toluene and contacted with a liquid transition metal compound (CT), preferably with a liquid transition metal compound (CT) of transition metals of groups 4 to 6, in particular of group 4, of the periodic table (IUPAC), like Ti (e.g. $TiC1_4$). Due to the contact of the solution of the complex (C) with the liquid transition metal compound (CT) an emulsion is formed. The production of a two-phase, i.e. of an emulsion, is encouraged by carrying out the contacting at low temperature, specifically above 10 °C but below 60 °C, preferably between above 20 °C and below 50 °C. The emulsion comprises a continuous phase and a dispersed phase in form of droplets. In the dispersed phase the complex (C) as well as the transition metal compound (CT) are present.

Additional catalyst components, like an aluminium compound, like aluminium alkyl, aluminium alkyl halide or aluminium alkoxy or aluminium alkoxy alkyl or halide or other compounds acting as reducing agents can be added to the reactions mixture at any step before the final recovery of the solid catalyst system. Further, during the preparation, any agents enhancing the emulsion formation can be added. As examples can be mentioned emulsifying agents or emulsion stabilisers e.g. surfactants, like acrylic or metacrylic polymer solutions and turbulence minimizing agents, like alpha-olefin polymers without polar groups, like polymers of alpha olefins of 6 to 20 carbon atoms.

Suitable processes for mixing the obtained emulsion include the use of mechanical as well as the use of ultrasound for mixing, as known to the skilled person. The process parameters, such as time of mixing, intensity of mixing, type of mixing, power employed for mixing, such as mixer velocity or wavelength of ultrasound employed, viscosity of solvent phase, additives employed, such as surfactants, etc. are used for adjusting the size of the solid catalyst system (SCS) particles.

Said solid catalyst system (SCS) particles may then be formed and recovered in usual manner, including the solidification of the catalyst particles by heating (for instance at a temperature of 70 to 150 °C, more preferably at 90 to 110 °C) and separating steps (for recovering the catalyst particles). In this connection reference is made to the disclosure in the international applications WO 03/000754, WO 03/000757, WO 2007/077027, WO 2004/029112 and WO 2007/077027 disclosing suitable reaction conditions. This disclosure is incorporated herein by reference. The solid catalyst particles (SCS) obtained may furthermore be subjected to further post-processing steps, such as washing, stabilizing, pre-polymerization, prior to the final use in polymerisation process.

<u>Precipitation method:</u>

The solid catalyst system according to the precipitation method is obtained by

(a) preparing a solution of a complex (C) of a metal which is selected from one of the groups 1 to 3 of the periodic table (IUPAC) and an internal electron donor (ID), said complex (C) is obtained by reacting a compound (CM) of said metal with said internal electron donor (ID) or a precursor (P-ID) thereof in an organic solvent,
(b) combining said solution of complex (C) with a liquid transition metal compound (CT) or a solution of a transition metal compound (CT) resulting in a precipitation of said catalyst system in the form of a solid particles.

Different to the emulsion process no emulsion is formed during the preparation of the solid catalyst system (SCS).

Accordingly for the precipitation method the complex (C) is preferably dissolved in an $C_6$ to $C_{10}$ aromatic hydrocarbon, like toluene and contacted with a liquid transition metal compound (CT), i.e. with a transition metal compound (CT) being not solid. Thus either the transition metal compound (CT) as such is a liquid or it is dissolved in a solvent at ambient temperatures, i.e. at temperatures up to 80 °C (20 to 80 °C). If a solvent is used for the transition metal compound (CT), it can be any organic solvent and can be the same as the organic solvent used for the complex (C) or can be different thereto, the latter being preferred. Preferably the organic solvent for the transition metal compound (CT) is $C_5$ to $C_{10}$ hydrocarbon, more preferably of a $C_6$ to $C_{10}$ alkane, like heptanes, octane or nonane, or any mixtures thereof. The transition metal compound (CT) is preferably a transition metal compound (CT) of transition metals of groups 4 to 6, in particular of group 4, of the periodic table (IUPAC), like Ti (e.g. $TiCl_4$). Due to the contact of the solution of the complex (C) with the liquid transition metal compound (CT) or with a solution of the transition metal compound (CT) precipitation occurs and the solid catalyst system (SCS) is formed.

The term "precipitation" according to this invention means that during the catalyst preparation a chemical reaction in a solution takes place leading to the desired catalyst system insoluble in said solution. Such a precipitated solid catalyst system is different in form and shape to a solid catalyst system obtained by the emulsion method discussed above.

Preferably the combining of the solution of the complex (C) with the liquid transition metal compound (CT) or with the solution of the transition metal compound (CT) is effected at a temperature of at least 50 °C, preferably in the temperature range of 50 to 110 °C, like in the temperature range of 70 to 100 °C, most preferably in the range of 85 to 95 °C. It is especially appreciated that after having combined the complex (C) and the transition metal compound (CT) that the whole reaction mixture is kept at least at 50 °C, more preferably is kept in the temperature range of 50 to 110 °C, like 70 to 100 °C, most preferably in the range of 85 to 95 °C, to secure full precipitation of the catalyst in form of a solid particle.

In addition it is possible, but not necessary to add some precipitating agent into solution of the complex (C) or the solution of the transition metal compound (CT). Such precipitating agents are able to effect morphology of the particles formed during the precipitation step. In a specific process no precipitating agent has been used. A precipitating agent according to this invention is an agent which promotes the precipitation of the catalyst system in form of a solid particle. For instance the organic solvent used for the transition metal compound (CT) can promote the precipitating and thus act and used as a precipitating agent. However, the final catalyst does not contain such a medium. In addition, it is possible to use as separate precipitating agent so called seed material, like silica or $MgCl_2$ particles. However, the particle size of the seed materials might be undesirable big and might negatively influence the electrical properties. Accordingly it is appreciated that the solid catalyst system (SCS) used in the present application is free of any precipitating agent residues. "Free" in this context throughout the invention means that not more than 1.0 wt.-%, preferably not more than 0.5 wt.-%, more preferably not more than 0.05 wt.-%, still more preferably not more than 0.005 wt.-%, yet more preferably no detectable precipitating agent is present within the solid catalyst system (SCS).

Additional catalyst components, like the cocatalyst and/or the external donor, as described above, can be used as normally in olefin polymerisation catalyst.

When adding the solution of the complex (C) to the liquid transition metal compound (CT) or the solution of the transition metal compound (CT) mixing is appreciated. Suitable mixing techniques include the use of mechanical as well as the use of ultrasound for mixing, as known to the skilled person.

Further it is appreciated that the solvent for the complex (C) on the one hand and the solvent of the transition metal compound (CT) on the other hand are selected in a way which supports the immediate precipitation of the solid catalyst system. As stated above, the solvent for the complex (C) comprises, preferably consists of, $C_5$ to $C_{10}$ hydrocarbon, more preferably of a $C_6$ to $C_{10}$ aromatic hydrocarbon, like toluene. The solvent where the transition metal compound (CT), like $TiCl_4$, can be solved, can be the same as for the complex (C) or can be different thereto, the latter being preferred. Preferably the solvent for the transition metal compound (CT) is $C_5$ to $C_{10}$ hydrocarbon, more preferably of a $C_6$ to $C_{10}$ alkane, like heptanes, octane or nonane, or any mixtures thereof. It is in particular appreciated that the solvent for the complex (C) is $C_6$ to $C_{10}$ aromatic hydrocarbon, like toluene, and the solvent for the transition metal compound (CT) is a $C_6$ to $C_{10}$ alkane, like heptanes.

After precipitation the solid catalyst system (SCS) particle is washed in a known manner. Accordingly it is preferred that solid catalyst system (SCS) particle is washed with toluene, preferably with hot (e. g. 90 °C) toluene and subsequently with heptane, most preferably with hot (e. g. 90 C) heptane. Further washings, e.g. with gold heptanes, or pentane are possible as well. For further information with regard to the precipitation method reference is made to EP 2 251 361.

<u>Propylene copolymer (R-PP)</u>

In the following the propylene copolymer (R-PP) obtained by the inventive process is defined in more detail.

One remarkable feature of the propylene copolymer (R-PP) is its rather high melt flow rate $MFR_2$ (230 °C). Accordingly, it is preferred that in the present invention the propylene copolymer composition (R-PP) has a the melt flow rate $MFR_2$ (230 °C) measured according to ISO 1133 in the range of equal or more than 65 g/10min to equal or below 200 g/10min, preferably in the range of equal or more than 70 g/10min to equal or below 150 g/10min, still more preferably in the range of 75.0 to 130.0 g/10min.

The propylene copolymer (R-PP) according to this invention is featured by its comonomer content. A "comonomer" according to this invention is a polymerizable unit different to propylene. Accordingly the propylene copolymer (R-PP) according to this invention has a comonomer content in the range of equal or more than 1.5 to equal or below 8.0 wt.-%, still more preferably in the range of equal or more than 2.5 to equal or below 6.0 wt.-%, yet more preferably in the range of equal or more than 3.0 to equal or below 5.5 wt.-%.

Accordingly the propylene copolymer (R-PP) comprises comonomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the propylene copolymer (R-PP) according to this invention comprises, especially consists of, monomers copolymerizable with propylene from the group consisting of ethylene, 1-butene and 1-hexene. More specifically the propylene copolymer (R-PP) of this invention comprises - apart from propylene - units derivable from ethylene and/or 1-butene. In a preferred embodiment the propylene copolymer (R-PP) comprises units derivable from ethylene and propylene only.

Thus in one preferred embodiment propylene copolymer (R-PP) is a propylene copolymer of propylene and ethylene only, wherein the ethylene content is in the range of equal or more than 1.5 to equal or below 8.0 wt.-%, more preferably in the range of equal or more than 2.5 to equal or below 6.0 wt.-%, yet more preferably in the range of equal or more than 3.0 to equal or below 5.5 wt.-%.

The propylene copolymer (R-PP) as well as the propylene copolymer fraction (C-A) and the propylene copolymer fraction (B) according to this invention are preferably random propylene copolymers. The term "random copolymer" has to be preferably understood according to IUPAC (Pure Appl. Chem., Vol. No. 68, 8, pp. 1591 to 1595, 1996). Preferably the molar concentration of comonomer dyads, like ethylene dyads, obeys the relationship

$$[HH] < [H]^2$$

wherein

[HH] is the molar fraction of adjacent comonomer units, like of adjacent ethylene units, and
[H] is the molar fraction of total comonomer units, like of total ethylene units, in the polymer.

Preferably the propylene copolymer (R-PP) as well as the polypropylene fraction (A) and the propylene copolymer fraction (B) as defined in detail below are isotactic. Accordingly it is appreciated that the propylene copolymer (R-PP), the polypropylene fraction (A) and the propylene copolymer fraction (B) have a rather high isotactic triad concentration, i.e. higher than 90 %, more preferably higher than 92 %, still more preferably higher than 93 % and yet more preferably higher than 95 %, like higher than 97 %.

The molecular weight distribution (MWD) is the relation between the numbers of molecules in a polymer and the individual chain length. The molecular weight distribution (MWD) is expressed as the ratio of weight average molecular weight ($M_w$) and number average molecular weight ($M_n$). The number average molecular weight ($M_n$) is an average molecular weight of a polymer expressed as the first moment of a plot of the number of molecules in each molecular weight range against the molecular weight. In effect, this is the total molecular weight of all molecules divided by the number of molecules. In turn, the weight average molecular weight ($M_w$) is the first moment of a plot of the weight of polymer in each molecular weight range against molecular weight.

Accordingly it is preferred that the propylene copolymer (R-PP) has a weight average molecular weight ($M_w$) from 80 to 400 kg/mol, more preferably from 120 to 350 kg/mol.

Further is appreciated that propylene copolymer (R-PP) is featured by a moderately broad molecular weight distribution. Accordingly the propylene copolymer (R-PP) has a molecular weight distribution (MWD) in the range of 4.0 to equal or below 7.0, preferably in the range of 4.5 to 6.5.

The main melting temperature ($T_m$) as measured by DSC according to ISO 11357-3 of the propylene copolymer (R-PP) is preferably at least 138 °C, more preferably of at least 145 °C. Thus it is in particular appreciated that the melting temperature ($T_m$) measured according to ISO 11357-3 of the propylene copolymer (R-PP) is in the range of 138 to 158 °C, more preferably in the range of 140 to 155 °C.

Additionally the propylene copolymer (R-PP) can be defined by the xylene cold soluble (XCS) content measured according to ISO 16152 (25 °C). Accordingly the propylene copolymer (R-PP) is preferably featured by a xylene cold soluble (XCS) content of below 20.0 wt.-%, more preferably of equal or below 15.0 wt.-%, yet more preferably equal or below 12.0 wt.-%. Thus it is in particular appreciated that the propylene copolymer (R-PP) of the instant invention has

a xylene cold soluble (XCS) content in the range of 3.0 to 20.0 wt.-%, more preferably in the range of 5.0 to 15.0 wt.-%, yet more preferably in the range of 6.5 to 13.0 wt.-%.

The amount of xylene cold soluble (XCS) additionally indicates that the propylene copolymer (R-PP) is preferably free of any elastomeric polymer component, like an ethylene propylene rubber. In other words the propylene copolymer (R-PP) shall be not a heterophasic polypropylene, i.e. a system consisting of a polypropylene matrix in which an elastomeric phase is dispersed. Such systems are featured by a rather high xylene cold soluble content.

Accordingly in a preferred embodiment the propylene copolymer (R-PP) comprises the polypropylene fraction (A) and the propylene copolymer fraction (B) as the only polymer components.

The propylene copolymer (R-PP) of the present invention is further defined by its polymer fractions present. Accordingly the propylene copolymer (R-PP) of the present invention comprises at least, preferably consists of, two fractions, namely the polypropylene fraction (A), which is produced in the first reactor (R-1) and the propylene copolymer fraction (B), which is produced in the second reactor (R-2).

Preferably weight ratio of the polypropylene fraction (A) to the propylene copolymer fraction (B) [(A)/(B)] is of 30/70 to 70/30, preferably of 35/65 to 65/35, more preferably of 45/55 to 55/45.

Further polypropylene fraction (A) is preferably the comonomer lean fraction whereas the propylene copolymer fraction (B) is the comonomer rich fraction.

Thus it is appreciated that the polypropylene (A) has a comonomer content of equal or below 4.0 wt.-%, more preferably of equal or below 3.0 wt.-%. Accordingly the polypropylene fraction (A) is a propylene copolymer fraction (C-A).

In the propylene copolymer fraction (C-A) the comonomer content is in the range of equal or more than 0.5 to equal or below 3.0 wt.-%.

More preferably the propylene copolymer fraction (C-A) is a random propylene copolymer.

The propylene copolymer fraction (C-A) comprises comonomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the propylene copolymer fraction (C-A) according to this invention comprises, especially consists of, monomers copolymerizable with propylene from the group consisting of ethylene, 1-butene and 1-hexene. More specifically the propylene copolymer fraction (C-A) of this invention comprises - apart from propylene - units derivable from ethylene and/or 1-butene. In a preferred embodiment the propylene copolymer fraction (C-A) comprises units derivable from ethylene and propylene only.

Thus the propylene copolymer fraction (C-A) is in one preferred embodiment a propylene copolymer of propylene and ethylene only, wherein the ethylene content is in the range of equal or more than 0.2 to equal or below 4.0 wt.-%, preferably in the range equal or more than 0.5 to equal or below 3.0 wt.-%.

The propylene copolymer fraction (B) preferably has a higher comonomer content than the polypropylene fraction (A). Accordingly the propylene copolymer fraction (B) has a comonomer content of equal or more than 2.5 wt.-% to equal or below 10.0 wt.-%, more preferably of equal or more than 3.0 to 10.0 wt.-%, still more preferably of equal or more than 3.5 to 10.0 wt.-%.

More preferably the propylene copolymer (B) is a random propylene copolymer.

The propylene copolymer fraction (B) comprises comonomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the propylene copolymer fraction (B) according to this invention comprises, especially consists of, monomers copolymerizable with propylene from the group consisting of ethylene, 1-butene and 1-hexene. More specifically the propylene copolymer fraction (B) of this invention comprises - apart from propylene - units derivable from ethylene and/or 1-butene. In a preferred embodiment the propylene copolymer fraction (B) comprises units derivable from ethylene and propylene only.

Thus the propylene copolymer fraction (B) is in one preferred embodiment a propylene copolymer of propylene and ethylene only, wherein the ethylene content is of equal or more than 2.5 wt.-% to equal or below 16.0 wt.-%, more preferably of equal or more than 3.0 to 12.0 wt.-%, still more preferably of equal or more than 3.5 to 10.0 wt.-%.

It is in particular preferred that the comonomers of the propylene copolymer fraction (C-A) and of the propylene copolymer fraction (B) are the same. Accordingly in one preferred embodiment the propylene copolymer (R-PP) of the instant invention comprises, preferably comprises only, a propylene copolymer fraction (C-A) and a propylene copolymer fraction (B), in both polymers the comonomer is only ethylene.

As mentioned above polypropylene fraction (A) is preferably the comonomer lean fraction whereas the propylene copolymer fraction (B) is the comonomer rich fraction. Accordingly the comonomer content in the polypropylene fraction (A) is lower compared to the comonomer content of the propylene copolymer fraction (B). Thus it is appreciated that the propylene copolymer (R-PP) fulfils the correlation com (R-PP) / com (A) being in the range of more than 0 to 10.0, like 1.1 to 10.0, more preferably being in the range of 1.2 to 6.0, still more preferably in the range of 1.5 to 5.0, wherein

com (A) is the comonomer content of the polypropylene fraction (A) given in weight percent [wt.-%],

com (R-PP) is the comonomer content of the propylene copolymer (R-PP) given in weight percent [wt.-%].

The equation is in particular applicable in case the polypropylene fraction (A) is a propylene copolymer fraction (C-A) as defined above.

In one embodiment the polypropylene fraction (A) and the propylene copolymer fraction (B) of the propylene copolymer (R-PP) differ in the melt flow rate only to some extent, if at all. Accordingly the ratio MFR (A)/MFR (R-PP) is in the range of 0.70 to 1.20, more preferably 0.75 to 1.20, yet more preferably in the range of 0.80 to 1.00, wherein

MFR (A) is the melt flow rate $MFR_2$ (230 °C) [g/10min] measured according to ISO 1133 of the polypropylene fraction (A),

MFR (R-PP) is the melt flow rate $MFR_2$ (230 °C) [g/10min] measured according to ISO 1133 ofthe propylene copolymer (R-PP).

Further it is appreciated that the polypropylene fraction (A) has a melt flow rate $MFR_2$ (230 °C) measured according to ISO 1133 in the range of equal or more than 68 g/10min to equal or below 200 g/10min, preferably in the range of equal or more than 70 g/10min to equal or below 180 g/10min, still more preferably in the range of 72.0 to 150.0 g/10min.

Additionally it is appreciated that the propylene copolymer fraction (B) has a melt flow rate $MFR_2$ (230 °C) measured according to ISO 1133 in the range of equal or more than 60 g/10min to equal or below 180 g/10min, preferably in the range of equal or more than 65 g/10min to equal or below 130 g/10min, still more preferably in the range of 70.0 to 120.0 g/10min.

Further the polypropylene fraction (A) has preferably a xylene cold soluble (XCS) content of below 6.0 wt.-%, more preferably of below 5.5 wt.-%, i.e. below 5.0 wt.-%, still more preferably in the range of 2.0 to 6.0 wt.-%, yet more preferably in the range of 2.5 to 5.5 wt.-%, still yet more preferably in the range of 2.8 to 5.0 wt.-%.

It is in particular preferred that the polypropylene fraction (A) has a lower xylene cold soluble (XCS) content than the propylene copolymer fraction (B). Accordingly it is preferred that the propylene copolymer fraction (B) has preferably a xylene cold soluble (XCS) content in the range of 3.0 to 20.0 wt.-%, yet more preferably in the range of 4.5 to 15.0 wt.-%.

Considering the information provided above the propylene copolymer (R-PP) obtained by the process of the instant invention, comprises a propylene copolymer fraction (C-A) and a propylene copolymer fraction (B) in the weight ratio [(C-A)/(B)] of 30/70 to 70/30, wherein said propylene copolymer (R-PP) has

(a) a comonomer content in the range of equal or more than 1.5 to equal or below 8.0 wt.-%, preferably in the range of equal or more than 2.0 to equal or below 8.0 wt.-% ,the comonomers are ethylene and /or $C_4$ to $C_{12}$ $\alpha$-olefins, and
(b) a melt flow rate $MFR_2$ (230 °C) measured according to ISO 1133 of equal or more than 65 to equal or below 200 g/10min,
wherein further
(c) said propylene copolymer fraction (C-A) has a comonomer content in the range of equal or more than 0.5 to equal or below 3.0 wt.-%, the comonomers are ethylene and /or $C_4$ to $C_{12}$ $\alpha$-olefins, and
(d) said propylene copolymer fraction (B) has a comonomer content in the range of equal or more than 2.5 to equal or below 16.0 wt.-%, preferably in the range of equal or more than 4.0 to equal or below 16.0 wt.-%, the comonomers are ethylene and /or $C_4$ to $C_{12}$ $\alpha$-olefins.

Further especially preferred embodiments are defined in the dependent product claims.

The propylene copolymer (R-PP) may contain additives known in the art, like antioxidants, nucleating agents, slip agents and antistatic agents. However the amount of additives shall not more 10 wt.-%, more preferably not more than5 wt.-%, still more preferably shall not more than 2 wt.-% within the propylene copolymer (R-PP).

The present invention is also directed to thin wall packaging elements, i.e. thin wall packaging elements having a thickness of equal or below 2 mm, preferably in the range of 0.2 to 2.0 mm. Preferably the thin wall packaging elements according to this invention comprise at least 70 wt.-%, more preferably comprise at least 90 wt.-%, yet more preferably comprise at least 95 wt.-%, still more preferably consisting of, a propylene copolymer (R-PP) as defined herein. Said thin wall packaging elements are preferably produced by injection molding Further the thin wall packaging elements are preferably selected from the group consisting of cups, boxes, trays, pails, buckets, bowls, lids, flaps, caps, CD covers, DVD covers and the like.

In the following the present invention is further illustrated by means of examples.

## EXAMPLES

### A. Measuring methods

The following definitions of terms and determination methods apply for the above general description of the invention as well as to the below examples unless otherwise defined. **Comonomer content,** especially ethylene content is measured with Fourier transform infrared spectroscopy (FTIR) calibrated with $^{13}$C-NMR. When measuring the ethylene content in polypropylene, a thin film of the sample (thickness about 250 $\mu$m) was prepared by hot-pressing. The area of absorption peaks 720 and 733 $cm^{-1}$ for propylene-ethylene-copolymers was measured with Perkin Elmer FTIR 1600 spectrometer. Propylene-1-butene-copolymers were evaluated at 767 $cm^{-1}$. The method was calibrated by ethylene content data measured by $^{13}$C-NMR. See also "IR-Spektroskopie für Anwender"; WILEY-VCH, 1997 and "Validierung in der Analytik", WILEY-VCH, 1997

Calculation of comonomer content of the propylene copolymer fraction (B):

$$\frac{C(RPP) - w(A)x\,C(A)}{w(B)} = C(B)$$

wherein

| | |
|---|---|
| w(A) | is the weight fraction of the polypropylene fraction (A), i.e. the product of the first reactor (R1), |
| w(B) | is the weight fraction of the propylene copolymer fraction (B), i.e. of the polymer produced in the second reactor (R2), |
| C(A) | is the comonomer content [in wt.-%] of the polypropylene fraction (A), i.e. of the product of the first reactor (R1), |
| C(RPP) | is the comonomer content [in wt.-%] of the propylene copolymer (R-PP), |
| C(B) | is the calculated comonomer content [in wt.-%] of the propylene copolymer fraction (B). |

### Mw, Mn, MWD

Mw/Mn/MWD are measured by Gel Permeation Chromatography (GPC) according to the following method:

The weight average molecular weight (Mw), the number average molecular weight (Mn), and the molecular weight distribution (MWD = Mw/Mn) is measured by a method based on ISO 16014-1:2003 and ISO 16014-4:2003. A Waters Alliance GPCV 2000 instrument, equipped with refractive index detector and online viscosimeter is used with 3 x TSK-gel columns (GMHXL-HT) from TosoHaas and 1,2,4-trichlorobenzene (TCB, stabilized with 200 mg/L 2,6-Di tert butyl-4-methyl-phenol) as solvent at 145 °C and at a constant flow rate of 1 mL/min. 216.5 $\mu$L of sample solution are injected per analysis. The column set is calibrated using relative calibration with 19 narrow MWD polystyrene (PS) standards in the range of 0.5 kg/mol to 11 500 kg/mol and a set of well characterized broad polypropylene standards. All samples are prepared by dissolving 5 to 10 mg of polymer in 10 mL (at 160 °C) of stabilized TCB (same as mobile phase) and keeping for 3 hours with continuous shaking prior sampling in into the GPC instrument.

### Melt Flow Rate (MFR)

The melt flow rates are measured with a load of 2.16 kg ($MFR_2$) at 230 °C. The melt flow rate is that quantity of polymer in grams which the test apparatus standardised to ISO 1133 extrudes within 10 minutes at a temperature of 230 °C under a load of 2.16 kg.

Calculation of melt flow rate $MFR_2$ (230 °C) ofthe propylene copolymer fraction (B):

$$MFR(B) = 10^{\left[\frac{\log(MFR(P)) - w(A)\,x\,\log(MFR(A))}{w(B)}\right]}$$

wherein

| | |
|---|---|
| w(A) | is the weight fraction of the polypropylene fraction (A), i.e. the product of the first reactor (R1), |

w(B) is the weight fraction of the propylene copolymer fraction (B), i.e. of the polymer produced in the second reactor (R2),
MFR(A) is the melt flow rate $MFR_2$ (230 °C) [in g/10min] ofthe polypropylene fraction (A),
MFR(P) is the melt flow rate $MFR_2$ (230 °C) [in g/10min] ofthe propylene copolymer (R-PP),
MFR(B) is the calculated melt flow rate $MFR_2$ (230 °C) [in g/10min] ofthe propylene copolymer fraction (B).

**Xylene cold soluble fraction (XCS wt%)**

Content of xylene cold solubles (XCS) is determined at 25 °C according ISO 16152; first edition; 2005-07-01.

**Calculation** of the xylene cold soluble (XCS) content of the propylene copolymer fraction (B):

$$\frac{XS(RPP) - w(A)x\,XS(A)}{w(B)} = XS(B)$$

wherein

w(A) is the weight fraction of the polypropylene fraction (A), i.e. the product of the first reactor (R1),
w(B) is the weight fraction of the propylene copolymer fraction (B), i.e. of the polymer produced in the second reactor (R2),
XS(A) is the xylene cold soluble (XCS) content [in wt.-%] of polypropylene fraction (A), i.e. of the product of the first reactor (R1),
XS(RPP) is the xylene cold soluble (XCS) content [in wt.-%] ofthe ofthe propylene copolymer (R-PP),
XS(B) is the calculated xylene cold soluble (XCS) content [in wt.-%] ofthe propylene copolymer fraction (B).

**Melting temperature $T_m$, crystallization temperature $T_c$,** is measured with Mettler TA820 differential scanning calorimetry (DSC) on 5-10 mg samples. Both crystallization and melting curves were obtained during 10 °C/min cooling and heating scans between 30 °C and 225 °C. Melting and crystallization temperatures were taken as the peaks of endotherms and exotherms.

Also the melt- and crystallization enthalpy **(Hm and Hc)** were measured by the DSC method according to ISO 11357-3.

**Tensile Modulus** is measured according to ISO 527-2 (cross head speed = 50 mm/min; 23 °C) using injection molded specimens as described in EN ISO 1873-2 (dog bone shape, 4 mm thickness).

**Charpy notched impact** strength is determined according to ISO 179 / 1eA at 23 °C, and at 0 °C by using injection moulded test specimens as described in EN ISO 1873-2 (80 x 10 x 4 mm).

**Haze** was determined according to ASTM D1003 on injection molded plaques of 60x60 $mm^2$ area and a thickness of 1 resp. 2 mm produced as described in EN ISO 1873-2. **Puncture energy** is determined in the instrumental falling weight (IFW) test according to ISO 6603-2 using injection moulded plaques of 60x60x2 $mm^3$. Puncture energy reported results from an integral ofthe failure energy curve measured at +23°C.

**Porosity:** BET with $N_2$ gas, ASTM 4641, apparatus Micromeritics Tristar 3000; sample preparation: at a temperature of 50 °C, 6 hours in vacuum.

**Surface area:** BET with $N_2$ gas ASTM D 3663, apparatus Micromeritics Tristar 3000: sample preparation at a temperature of 50 °C, 6 hours in vacuum.

**Mean particle size** is given in nm and measured with Coulter Counter LS200 at room temperature with n-heptane as medium; particle sizes below 100 nm by transmission electron microscopy.

**B. Examples**

The catalyst A used in the polymerization processes ofthe inventive examples IE1 to IE4 was the catalyst of the example section of WO 2010009827 A1 (see pages 30 and 31)

The catalyst B used in the polymerization processes of comparative examples CE1 and CE2 was the commercial BCF20P catalyst (1.9 wt Ti-Ziegler-Natta-catalyst as described in EP 591 224) of Borealis with triethyl-aluminium (TEA) as co-catalyst and dicyclo pentyl dimethoxy silane as donor. The aluminium to donor ratio was 5 mol/mol. Before the polymerization, the catalyst was prepolymerized with vinyl cyclohexane in an amount to achieve a concentration of 200 ppm poly(vinyl cyclohexane) (PVCH) in the final polymer. The respective process is described in EP 1 028 984 and EP 1 183 307.

The propylene copolymers (R-PP) of table 1 have been produced in a Borstar PP pilot plant in a two-step

polymerization process starting in prepolimerization reactor, followed by a bulk-phase loop reactor and subsequently by polymerization in a gas phase reactor, varying the molecular weight as well as ethylene content by appropriate hydrogen and comonomer feeds.

Comparative example 3 is the commercial random propylene copolymer RJ900MO from Borealis Polyolefine GmbH, Austria.

**Table 1:** Preparation of the propylene copolymers (R-PP)

| | | CE1 | CE2 | IE1 | IE2 | IE3 | IE4 |
|---|---|---|---|---|---|---|---|
| Catalyst | [-] | B | A | A | A | A | A |
| Donor | [-] | D | D | D | D | D | D |
| **Prepol** | | | | | | | |
| T | [°C] | 25 | 30 | 30 | 30 | 30 | 30 |
| p | [bar] | 52 | 54 | 53 | 54 | 53 | 54 |
| $t_{RES}$ | [h] | 0.35 | 0.35 | 0.34 | 0.34 | 0.35 | 0.34 |
| $C_2$ | [wt.-%] | 0 | 0 | 0.4 | 0.4 | 0.5 | 0.5 |
| **Loop** | | | | | | | |
| T | [°C] | 65 | 70 | 80 | 80 | 80 | 80 |
| p | [bar] | 55 | 56 | 58 | 58 | 58 | 58 |
| tRES | [h] | 0.38 | 0.38 | 0.29 | 0.27 | 0.39 | 0.25 |
| $MFR_2$ | [g/ 10 min] | 302 | 100 | 108 | 105 | 76 | 103 |
| $C_2$ | [wt.-%] | 0 | 1.5 | 1.4 | 1.4 | 1.3 | 1.5 |
| XCS | [wt.-%] | 2.0 | 5.2 | 3.2 | 4.6 | 3.6 | 3.9 |
| **GPR** | | | | | | | |
| T | [°C] | 80 | 80 | 90 | 90 | 90 | 90 |
| p | [bar] | 23 | 25 | 26 | 26 | 27 | 27 |
| tRES | [h] | 1.1 | 1.07 | 1.04 | 0.8 | 0.9 | 0.7 |
| $MFR_2$ | [g/ 10 min] | 4.7 | 114 | 125 | 96 | 78 | 73 |
| $C_2$ | [wt.-%] | 4.9 | 6.0 | 6.1 | 6.2 | 6.5 | 6.8 |
| Split Loop/GPR | [%] | 61/39 | 42/58 | 44/56 | 45/55 | 46/54 | 46/54 |
| **FINAL** | | | | | | | |
| $C_2$ | [wt.-%] | 1.9 | 4.1 | 4.0 | 4.0 | 4.1 | 4.3 |
| $MFR_2$ | [g/10 min] | 60 | 108 | 117 | 100 | 77 | 85 |

(continued)

| FINAL | | | | | | | |
|---|---|---|---|---|---|---|---|
| productivity | [kgPP/gCat] | 25.4 | 23.6 | 50.7 | 63.0 | 82.8 | 84.2 |

Prepol defines pre-polymerization
Loop defines the polypropylene fraction (A)
GPR defines the propylene copolymer fraction (B)
Final defines the propylene copolymer (R-PP)
$C_2$ is ethylene content
T is the temperature within the reactor
p is the temperature within the reactor
$t_{RES}$ is the average residence time in the reactor

**Table 2:** Properties of the propylene copolymers (R-PP)

| Example | | CE1 | CE2 | CE3 | IE1 | IE2 | IE3 | IE4 |
|---|---|---|---|---|---|---|---|---|
| $MFR_2$ | [g/10 min] | 60 | 108 | 110 | 117 | 100 | 77 | 85 |
| Mw | [kg/mol] | 150 | 114 | 110 | 108 | 120 | 127 | 115 |
| MWD | [-] | 4.6 | 5.0 | 3.5 | 5.8 | 5.5 | 5.6 | 5.4 |
| $C_2$ | [wt.-%] | 1.9 | 4.1 | 2.8 | 4.0 | 4.0 | 4.1 | 4.3 |
| XCS | [wt.-%] | 2.2 | 11.3 | 5.0 | 8.9 | 9.1 | 10.5 | 11.5 |
| Tm | [°C] | 162 | 152 | 147 | 153 | 151 | 152 | 151 |
| Tc | [°C] | 129 | 124 | 118 | 125 | 122 | 123 | 123 |
| TM | [MPa] | 1681 | 1047 | 1278 | 1099 | 1069 | 988 | 934 |
| NIS (23°C) | [kJ/m$^2$] | 2.3 | 3.9 | 3.0 | 3.7 | 4.0 | 3.7 | 3.8 |
| PE | [J] | 1.5 | 4.1 | 1.4 | 3.3 | 4.5 | 5.4 | 6.0 |
| H | [%] | 34 | 9.5 | 15.6 | 10.4 | 9.5 | 12.6 | 10.5 |

TM tensile modulus (ISO 527-2, 23°C)
NIS Notche impact strength (Charpy ISO 179 1eA, 23°C)
PE Puncture energy RT (1mm, ISO 6603-2)
H Haze (ASTM D1003)
$C_2$ ethylene content (FTIR)

## Claims

**1.** Propylene copolymer (R-PP) comprising a propylene copolymer fraction (C-A) and a propylene copolymer fraction (B) in the weight ratio [(C-A)/(B)] of 30/70 to 70/30, wherein said propylene copolymer (R-PP) has

(a) a comonomer content in the range of equal or more than 1.5 to equal or below 8.0 wt.-%, the comonomers are ethylene and /or $C_4$ to $C_{12}$ $\alpha$-olefins,
and
(b) a melt flow rate $MFR_2$ (230°C) measured according to ISO 1133 of equal or more than 65 to equal or below 200 g/10min,
and
(c) a molecular weight distribution (MWD) measured by gel permeation chromatography (GPC) in the range of equal or more than 4.0 to equal or below 7.0,
wherein further
(d) said propylene copolymer fraction (C-A) has a comonomer content in the range of equal or more than 0.5 to equal or below 3.0 wt.-%, the comonomers are ethylene and /or $C_4$ to $C_{12}$ $\alpha$-olefins, and
(e) said propylene copolymer fraction (B) has a comonomer content in the range of equal or more than 2.5 to

equal or below 10.0 wt.-%, the comonomers are ethylene and /or $C_4$ to $C_{12}$ $\alpha$-olefins.

2. Propylene copolymer (R-PP) according to claim 1, wherein the propylene copolymer fraction (C-A) is the comonomer lean fraction and the propylene copolymer fraction (B) is the comonomer rich fraction.

3. Propylene copolymer (R-PP) according to claim 1 or 2, wherein propylene copolymer fraction (B) has a comonomer content in the range of equal or more than 3.5 to equal or below 10.0 wt.-%.

4. Propylene copolymer (R-PP) according to any one of the preceding claims, wherein the ratio MFR (C-A) / MFR (R-PP) is in the range of 0.70 to 1.20
wherein

MFR (C-A) is the melt flow rate $MFR_2$ (230 °C) [g/10min] measured according to ISO 1133 of the polypropylene copolymer fraction (A),
MFR (R-PP) is the melt flow rate $MFR_2$ (230 °C) [g/10min] measured according to ISO 1133 of the propylene copolymer (R-PP).

5. Propylene copolymer (R-PP) according to any one of the preceding claims, wherein the propylene copolymer fraction (C-A) has

(a) a melt flow rate $MFR_2$ (230 °C) measured according to ISO 1133 in the range of 68 to 200 g/10min, and/or
(b) a xylene soluble content (XCS) determined at 25 °C according to ISO 16152 of below 5.0 wt.-%.

6. Propylene copolymer (R-PP) according to any one of the preceding claims, wherein the propylene copolymer fraction (B) has

(a) a melt flow rate $MFR_2$ (230 °C) measured according to ISO 1133 in the range of 60 to 180 g/10min, and/or
(b) a xylene soluble content (XCS) determined at 25 °C according to ISO 16152 in the range of equal or more than 3.0 to equal or below 20.0 wt.-%.

7. Propylene copolymer (R-PP) according to any one of the preceding claims, wherein the propylene copolymer (R-PP) has

(a) a xylene soluble content (XCS) determined at 25 °C according to ISO 16152 in the range of equal or more than 3.0 to equal or below 20.0 wt.-%.
and/or
(b) a melting temperature Tm determined by differential scanning calorimetry (DSC) of at least 138 °C.

8. Thin wall packaging comprising a propylene copolymer (R-PP) according to any one of the preceding claims.

9. Thin wall packaging comprising a propylene copolymer (R-PP) according to claim 8, wherein thin wall packging comprises at least 70 wt.-% of the propylene copolymer (R-PP).

10. Thin wall packaging comprising a propylene copolymer (R-PP) according to claim 8 or 9, wherein packacking has a tickness of equal or below 2mm.

11. Thin wall packaging according to any one of the preceding claims 8 to 11, wherein the packacking are selected from the group consisting of cups, boxes, trays, pails, buckets, bowls, lids, flaps, caps, CD covers, and DVD covers.

**Patentansprüche**

1. Propylen-Copolymer (R-PP), umfassend eine Propylen-Copolymer-Fraktion (C-A) und eine Propylen-Copolymer-Fraktion (B) in dem Gewichtsverhältnis [(C-A)/(B)] von 30/70 bis 70/30, wobei das Propylen-Copolymer (R-PP) aufweist

(a) einen Comonomer-Gehalt in dem Bereich von gleich oder mehr als 1,5 bis gleich oder unter 8,0 Gew.-%, wobei die Comonomere Ethylen und/oder $C_4$ bis $C_{12}$ $\alpha$-Olefine darstellen,
und
(b) eine Schmelze-Massefließ-Rate $MFR_2$ (230 °C), gemessen gemäß ISO 1133, von gleich oder mehr als 65 bis gleich oder unter 200 g/10 min,
und
(c) eine Molekulargewichts-Verteilung (MWD), gemessen durch Gelpermeations-Chromatographie (GPC), in dem Bereich von gleich oder mehr als 4,0 bis gleich oder unter 7,0,
wobei weiterhin
(d) die Propylen-Copolymer-Fraktion (C-A) einen Comonomer-Gehalt in dem Bereich von gleich oder mehr als 0,5 bis gleich oder unter 3,0 Gew.-% aufweist, wobei die Comonomere Ethylen und/oder $C_4$ bis $C_{12}$ $\alpha$-Olefine darstellen, und
(e) die Propylen-Copolymer-Fraktion (B) einen Comonomer-Gehalt in dem Bereich von gleich oder mehr als 2,5 bis gleich oder unter 10,0 Gew.-% aufweist, wobei die Comonomere Ethylen und/oder $C_4$ bis $C_{12}$ $\alpha$-Olefine darstellen.

**2.** Propylen-Copolymer (R-PP) nach Anspruch 1, wobei die Propylen-Copolymer-Fraktion (C-A) die an Comonomer arme Fraktion darstellt und die Propylen-Copolymer-Fraktion (B) die an Comonomer reiche Fraktion darstellt.

**3.** Propylen-Copolymer (R-PP) nach Anspruch 1 oder 2, wobei die Propylen-Copolymer-Fraktion (B) einen Comonomer-Gehalt in dem Bereich von gleich oder mehr als 3,5 bis gleich oder unter 10,0 Gew.-% aufweist.

**4.** Propylen-Copolymer (R-PP) nach einem der vorangehenden Ansprüche, wobei das Verhältnis MFR (C-A) / MFR (R-PP) in dem Bereich von 0,70 bis 1,20 liegt,
wobei

MFR (C-A) die Schmelze-Massefließ-Rate $MFR_2$ (230 °C) [g/10 min], gemessen gemäß ISO 1133, der Polypropylen-Copolymer-Fraktion (A) darstellt,
MFR (R-PP) die Schmelze-Massefließ-Rate $MFR_2$ (230 °C) [g/10 min], gemessen gemäß ISO 1133, des Propylen-Copolymers (R-PP) darstellt.

**5.** Propylen-Copolymer (R-PP) nach einem der vorangehenden Ansprüche, wobei die Propylen-Copolymer-Fraktion (C-A) aufweist

(a) eine Schmelze-Massefließ-Rate $MFR_2$ (230°C), gemessen gemäß ISO 1133, in dem Bereich von 68 bis 200 g/10 min,
und/oder
(b) einen in Xylol löslichen Gehalt (XCS), bestimmt bei 25°C gemäß ISO 16152, von unter 5,0 Gew.-%.

**6.** Propylen-Copolymer (R-PP) nach einem der vorangehenden Ansprüche, wobei die Propylen-Copolymer-Fraktion (B) aufweist

(a) eine Schmelze-Massefließ-Rate $MFR_2$ (230°C), gemessen gemäß ISO 1133, in dem Bereich von 60 bis 180 g/10 min,
und/oder
(b) einen in Xylol löslichen Gehalt (XCS), bestimmt bei 25°C gemäß ISO 16152, in dem Bereich von gleich oder mehr als 3,0 bis gleich oder unter 20,0 Gew.-%.

**7.** Propylen-Copolymer (R-PP) nach einem der vorangehenden Ansprüche, wobei das Propylen-Copolymer (R-PP) aufweist

(a) einen in Xylol löslichen Gehalt (XCS), bestimmt bei 25°C gemäß ISO 16152, in dem Bereich von gleich oder mehr als 3,0 bis gleich oder unter 20,0 Gew.-%, und/oder
(b) eine Schmelztemperatur Tm, bestimmt durch dynamische Differenz-Kalorimetrie (DSC), von mindestens 138°C.

**8.** Dünnwandige Verpackung, umfassend ein Propylen-Copolymer (R-PP) nach einem der vorangehenden Ansprüche.

**9.** Dünnwandige Verpackung, umfassend ein Propylen-Copolymer (R-PP) nach Anspruch 8, wobei die dünnwandige Verpackung mindestens 70 Gew.-% des Propylen-Copolymers (R-PP) umfasst.

**10.** Dünnwandige Verpackung, umfassend ein Propylen-Copolymer (R-PP) nach Anspruch 8 oder 9, wobei die Verpackung eine Dicke von gleich oder unter 2 mm aufweist.

**11.** Dünnwandige Verpackung nach einem der vorangehenden Ansprüche 8 bis 11, wobei die Verpackung ausgewählt ist aus der Gruppe, bestehend aus Bechern, Kästen, Ablagen, Eimern, Kübeln, Schalen, Deckeln, Klappen, Verschlussteilen, CD-Hüllen und DVD-Hüllen.

**Revendications**

**1.** Copolymère de propylène (R-PP) comprenant une fraction copolymère de propylène (C-A) et une fraction copolymère de propylène (B) en un rapport en poids [(C-A)/ (B)] de 30/70 à 70/30, ledit copolymère de propylène (R-PP) présentant

(a) une teneur en comonomères située dans la plage allant de 1,5 ou plus à 8,0 % en poids ou moins, les comonomères étant l'éthylène et/ou des $\alpha$-oléfines en $C_4$ à $C_{12}$,
et
(b) un indice de fluage $MFR_2$ (230°C), mesuré conformément à la norme ISO 1133, de 65 ou plus à 200 g/10 min ou moins,
et
(c) une distribution des masses moléculaires (MWD), mesurée par chromatographie par perméation sur gel (GPC), située dans la plage allant de 4,0 ou plus à 7,0 ou moins, dans lequel, en outre
(d) ladite fraction de copolymère de propylène (C-A) présente une teneur en comonomères située dans la plage allant de 0,5 ou plus à 3,0 % en poids ou moins, les comonomères étant l'éthylène et/ou des $\alpha$-oléfines en $C_4$ à $C_{12}$, et
(e) ladite fraction de copolymère de propylène (B) présente une teneur en comonomères située dans la plage allant de 2,5 ou plus à 10,0 % en poids ou moins, les comonomères étant l'éthylène et/ou des $\alpha$-oléfines en $C_4$ à $C_{12}$.

**2.** Copolymère de propylène (R-PP) selon la revendication 1, dans lequel la fraction copolymère de propylène (C-A) est la fraction pauvre en comonomères et la fraction copolymère de propylène (B) est la fraction riche en comonomères.

**3.** Copolymère de propylène (R-PP) selon la revendication 1 ou 2, dans lequel la fraction copolymère de propylène (B) présente une teneur en comonomères située dans la plage allant de 3,5 ou plus à 10,0 % en poids ou moins.

**4.** Copolymère de propylène (R-PP) selon l'une quelconque des revendications précédentes, dans lequel le rapport MFR (C-A) / MFR (R-PP) est situé dans la plage allant de 0,70 à 1,20
où

MFR (C-A) est l'indice de fluage $MFR_2$ (230°C) [g/10 min], mesuré conformément à la norme ISO 1133, de la fraction copolymère de polypropylène (A),
MFR (R-PP) est l'indice de fluage $MFR_2$ (230°C) [g/10 min], mesuré conformément à la norme ISO 1133, de la fraction copolymère de polypropylène (R-PP).

**5.** Copolymère de propylène (R-PP) selon l'une quelconque des revendications précédentes, dans lequel la fraction copolymère de propylène (C-A) présente

(a) un indice de fluage $MFR_2$ (230°C), mesuré conformément à la norme ISO 1133, situé dans la plage allant de 68 à 200 g/10 min,
et/ou
(b) une teneur en composants solubles dans le xylène (XCS), déterminée à 25°C conformément à la norme ISO 16152, inférieure à 5,0 % en poids.

**6.** Copolymère de propylène (R-PP) selon l'une quelconque des revendications précédentes, dans lequel la fraction

copolymère de propylène (B) présente

(a) un indice de fluage $MFR_2$ (230°C), mesuré conformément à la norme ISO 1133, situé dans la plage allant de 60 à 180 g/10 min,
et/ou
(b) une teneur en composants solubles dans le xylène (XCS), déterminée à 25°C conformément à la norme ISO 16152, située dans la plage allant de 3,0 ou plus à 20,0 % en poids ou moins.

**7.** Copolymère de propylène (R-PP) selon l'une quelconque des revendications précédentes, lequel copolymère de propylène (R-PP) présente

(a) une teneur en composants solubles dans le xylène (XCS), déterminée à 25°C conformément à la norme ISO 16152, située dans la plage allant de 3,0 ou plus à 20,0 % en poids ou moins, et/ou
(b) un point de fusion Tm, déterminé par calorimétrie à balayage différentiel (DSC), d'au moins 138°C.

**8.** Emballage à paroi mince comprenant un copolymère de propylène (R-PP) selon l'une quelconque des revendications précédentes.

**9.** Emballage à paroi mince comprenant un copolymère de propylène (R-PP) selon la revendication 8, lequel emballage à paroi mince comprend au moins 70 % en poids du copolymère de propylène (R-PP).

**10.** Emballage à paroi mince comprenant un copolymère de propylène (R-PP) selon la revendication 8 ou 9, lequel emballage présente une épaisseur égale ou inférieure à 2 mm.

**11.** Emballage à paroi mince selon l'une quelconque des revendications 8 à 10, lequel emballage est choisi dans l'ensemble constitué par les tasses, les boîtes, les plateaux, les seaux, les godets, les bols, les couvercles, les rabats, les housses de CD et les housses de DVD.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1873173 A
- EP 2281851 A
- WO 03000754 A
- WO 03000757 A
- WO 2007077027 A
- EP 2251361 A
- WO 2004029112 A
- WO 2010009827 A1
- EP 591224 A
- EP 1028984 A
- EP 1183307 A


### Non-patent literature cited in the description


- *Pure Appl. Chem.,* 1996, vol. 68 (8), 1591-1595
- IR-Spektroskopie für Anwender. WILEY-VCH, 1997
- Validierung in der Analytik. WILEY-VCH, 1997